# EUROPÄISCHE PATENTSCHRIFT

(11) **EP 0 569 996 B1**
(45) Veröffentlichungstag und Bekanntmachung des Hinweises auf die Patenterteilung: **06.03.1996**
(21) Anmeldenummer: 93107845.5
(22) Anmeldetag: 13.05.1993
(51) Int. Cl.: C05F 17/02, B07B 1/24

(54) **Kompostierer**
Composting device
Récipient de compostage

(30) Priorität: 13.05.1992 DE 9206445 U
(43) Veröffentlichungstag der Anmeldung: 18.11.1993
(73) Patentinhaber: Heller, Bernhard, D-83104 Tuntenhausen (DE)
(72) Erfinder: Heller, Bernhard, D-83104 Tuntenhausen (DE)
(74) Vertreter: Kern, Wolfgang, Dipl.-Ing.

(56) Entgegenhaltungen:
- EP-A- 0 462 584
- DE-U- 9 006 253
- DE-U- 9 200 601
- GB-A- 2 249 271

## Beschreibung

Die Erfindung betrifft einen Kompostierer nach dem Oberbegriff des Anspruchs 1.

Kompostierer werden gewöhnlich als ortsfeste Einrichtungen im Garten aufgestellt und mit den zu kompostierenden Abfällen gefüllt. Sobald der Kompostierungsvorgang beendet ist, der Kompost also der vorgesehenen Bestimmung zugeführt werden kann, wird der Kompost gesiebt, um Grobteile abzusondern und entweder erneut zu kompostieren oder zu zerkleinern. Hierzu ist es notwendig, daß neben dem Komposthaufen bzw. dem Kompostierer in der Regel ein Wurfsieb mit gewünschter Maschweite aufgestellt wird.

Ein Kompostierer nach dem Oberbegriff des Anspruchs 1 ist aus der DE-U1-92 00 601 bekannt. Bei diesem Kompostierer ist die Siebtrommel über zwei Klemmringe und vier Haltespangen mit der Mischtrommel des Betonmischers verbunden.

Der Erfindung liegt die Aufgabe zugrunde, einen Kompostierer der eingangs genannten Art so weiterzubilden, daß das Sieben des fertigen Kompostes erleichtert und der hierfür notwendige apparative Aufwand vergleichsweise gering ist.

Diese Aufgabe wird erfindungsgemäß durch einen Kompostierer mit den Merkmalen des Anspruchs 1 gelöst. Vorteilhafte Weiterbildungen des Erfindungsgegenstandes sind in den Unteransprüchen angegeben.

Die Holme dienen der Siebtrommel im nicht mit der Drehantriebsvorrichtung gekuppelten Zustand als Standbeine zur stehenden, stationären Verwendung des Kompostierers als Kompostsilo und sind an der Siebtrommel befestigt und auf die Mischtrommel des Betonmischers zur Herstellung einer drehfesten Verbindung aufsteckbar.

Die Verbindung zwischen den Holmen und der Drehantriebsvorrichtung läßt sich vorteilhafterweise mit Hilfe bajonettartiger Elemente herstellen. Die Holme sind zweckmäßigerweise im Inneren der Siebtrommel befestigt und können hier gleichzeitig als Mitnehmer für den zu siebenden Kompost dienen. Andererseits ist es auch möglich, die sich parallel zur Trommellängsachse erstreckenden Holme auf der äußeren Sieboberfläche zu befestigen, so wie es sich als zweckmäßig erwiesen hat, die Holme im Bereich der Mischtrommel mit Ausgleichsstücken aus Holz oder Kunststoff zur Verhinderung von Lackschäden zu versehen.

Die Neigung der Siebtrommel kann mit Hilfe der Drehantriebsvorrichtung einstellbar sein. Das zur Abstützung desjenigen Siebtrommelendes, das nicht mit der Drehantriebsvorrichtung über die Holme in Verbindung steht, dienende Stativ weist zweckmäßigerweise einen Oberteil auf, der mit Laufrollen versehen ist, auf denen die Oberfläche der Siebtrommel abrollt. Diese Laufrollen können gemäß einer anderen Ausgestaltung der Erfindung im Querschnitt keilriemenförmig ausgebildet sein, wodurch das Zermahlen von Siebmaterial, das aus der Siebtrommel u.U. au die Laufrolle fällt, weitgehend verhindert wird.

Es hat sich ferner bewährt, das Oberteil des Stativs auf den Ständer des Stativs aufsteckbar und in bezug auf diesen drehbar zu gestalten sowie höhenverstellbar, so daß die Siebtrommel in unterschiedlichen Neigungswinkeln angeordnet werden kann. Darüber hinaus könnte das Stativ mit einer Rutsche für die maschinelle Beschickung der Siebtrommel versehen werden.

Die Siebtrommel kann von mehreren Flacheisenringen umgeben sein, von denen wenigstens einer im Bereich des einen Endes der Siebtrommel angeordnet ist und den Laufrollen des Stativs als Auflagerfläche dient.

Zum Zwecke der Klassierung des Siebgutes, also des Kompostes, hat es sich bewährt, die Siebtrommel mit Siebgewebe oder Siebblech unterschiedlicher Maschen- bzw. Lochweite zu bespannen, und zwar derart, daß sich das Gewebe bzw. Blech mit der größten Maschen- bzw. Lochweite an dem die Holme aufweisenden Trommelende und dasjenige mit der kleinsten Maschen- bzw. Lochweite sich an dem anderen Trommelende befindet, das durch das Stativ abstützbar ist.

Eine solche Siebtrommel läßt sich auch unabhängig von einer Drehantriebsvorrichtung in der Weise benutzen, daß sie mit den Holmen schräg zur Erdbodenoberfläche nur abgestützt auf dem Stativ aufgestellt wird und dann als Durchwurfsieb verwendet wird.

Darüber hinaus kann es in bestimmten Fällen vorteilhaft sein, die Siebtrommel zur Wärmeisolierung mit einem Isoliermantel aus einem verrottungsfesten, wasserfesten und luftdurchlässigen Material zu umgeben oder über der Siebtrommel zu Reinigungszwecken eine Bürste anzuordnen, die in bezug auf die rotierende Siebtrommel ortsfest ist und mit der Sieboberfläche in Eingriff gebracht wird.

Innerhalb der Siebtrommel können übliche Schikanen angeordnet sein, die zur Verbesserung der Siebwirkung dienen und beispielsweise Bremsplatten und/oder schaufelartige Mitnehmer bilden, wobei sowohl die Bremsplatten als auch die Mitnehmer einstellbar angebracht sein bzw. die Bremsplatten an den Mitnehmern befestigt sein können.

Die Erfindung wird nachfolgend an Hand der in der Zeichnung dargestellten Ausführungsbeispiele näher erläutert. In der Zeichnung zeigen:
- Fig. 1: eine schematische Seitenansicht der Siebtrommel des erfindungsgemäßen Kompostierers, verwendet als Kompostsilo,
- Fig. 2: eine schematische Seitenansicht der Siebtrommel des Kompostierers, verwendet als Rollsieb, gekuppelt mit der Mischtrommel eines handelsüblichen Betonmischers,
- Fig. 3: eine der Fig. 1 ähnliche Ansicht der Siebtrommel, benutzt als Wurfsieb ohne Drehantrieb,
- Fig. 4: eine der Fig. 2 ähnliche Ansicht des Rollkompostierers mit weiteren Details,
- Fig. 5: eine Stirnansicht des Kompostierers von Fig. 4 in Richtung des Pfeils A in Fig. 4,
- Fig. 6: eine schematische Ansicht der Siebtrommel mit unterschiedlichen Siebgeweben zur Klassierung des Siebgutes,
- Fig. 7: eine vergrößerte Detailansicht einer Laufrolle des Stativs im Eingriff mit einem Führungsring der Siebtrommel, und
- Fig. 8: eine vergrößerte Detailansicht der Steck- und Drehverbindung des Stativoberteils.

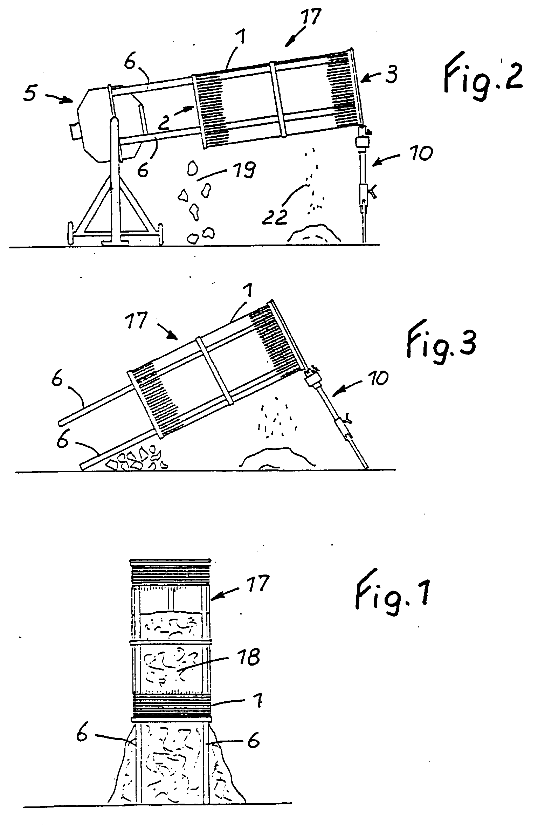

Der in Fig. 1 gezeigte Kompostierer bildet einen trommelförmigen, zylindrischen Kompostbehälter 17, der transportabel ist und zur Kompostierung auf wenigstens drei Holmen 6, die seine Standbeine bilden, über einer Bodenfläche anordbar ist. Der Kompostbehälter 17 bildet eine Siebtrommel 1, deren Mantel aus einem oder mehreren Siebgeweben oder Lochblechen besteht, durch deren Maschen bzw. Löcher hindurch das in die Trommel eingefüllte, zu kompostierende Abfallmaterial 18 belüftet wird.

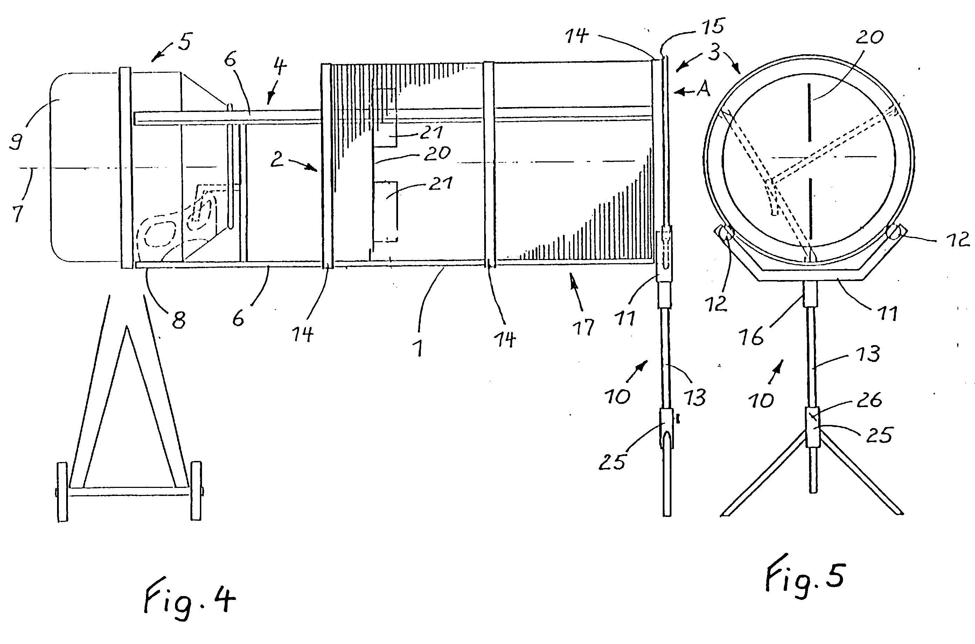

Der in Fig. 1 dargestellte Kompostierer läßt sich in einfacher Weise als Rollsieb benutzen, wie in den Fig. 2 und 4 dargestellt. Hierzu weist die zylindrische Siebtrommel 1 an ihrem einen Ende 2 eine Kupplungsvorrichtung 4 auf, die die parallel zur Trommellängsachse 7 verlaufenden Holme 6 als Verbindungselemente benutzt, die sonst als Standbeine bei der stehenden, stationären Verwendung des Kompostierers als Kompostsilo dienen, wie in Fig. 3 gezeigt. Diese Holme 6 dienen zur Verbindung der Siebtrommel in horizontaler oder nahezu horizontaler Lage in einem ausreichenden Abstand über der Bodenfläche mit einer Drehantriebsvorrichtung, die im Falle der dargestellten Ausführungsbeispiele die motorgetriebene Mischtrommel 9 eines handelsüblichen Betonmischers 5 ist, auf die die Holme 6 aufgesteckt und zur Herstellung einer drehfesten Verbindung mit Hilfe von nicht dargestellten bajonettartigen Elementen festgeklemmt werden derart, daß zwischen der Mischtrommel 9 und dem die Holme 6 aufweisenden Ende 2 der Siebtrommel 1 ein Abstand bleibt, der ein Herausfallen des groben Siebgutes 19 aus der Trommel ermöglicht, daß während der Drehbewegung der Siebtrommel, angetrieben durch die Mischtrommel des Betonmischers, nicht durch die Maschen des Siebgewebes bzw. Löcher des Lochbleches, wie bei 22 in Fig. 2 gezeigt, hindurchgefallen ist.

Im Bereich des den Holmen 6 gegenüberliegenden Endes 3 der Siebtrommel 1 ist diese mit Hilfe eines Stativs 10 gegen die Bodenoberfläche abgestützt, das einen Oberteil 11 aufweist, der mit Laufrollen 12 versehen ist, auf denen die Oberfläche der Siebtrommel abrollt, wenn die Siebtrommel in Umdrehung versetzt wird. Die Laufrollen 12, von denen eine in Fig. 7 im Detail dargestellt ist, bestehen aus einem verschleißfesten Material und sind im Querschnitt keilriemenförmig ausgebildet, wodurch eine Führungsbahn für einen an dem genannten Siebtrommelende vorgesehenen Führungsring 15 geschaffen wird. Zwischen der unteren Oberfläche 23 dieses Führungsrings und der Rollenoberfläche ist ein Hohlraum 24 vorhanden, der Siebmaterial aufnehmen kann, das eventuell bei der Beschickung der Siebtrommel auf die Laufrollen fällt, wodurch verhindert wird, daß dieses Material zwischen Führungsring und Laufrollen zermahlen wird.

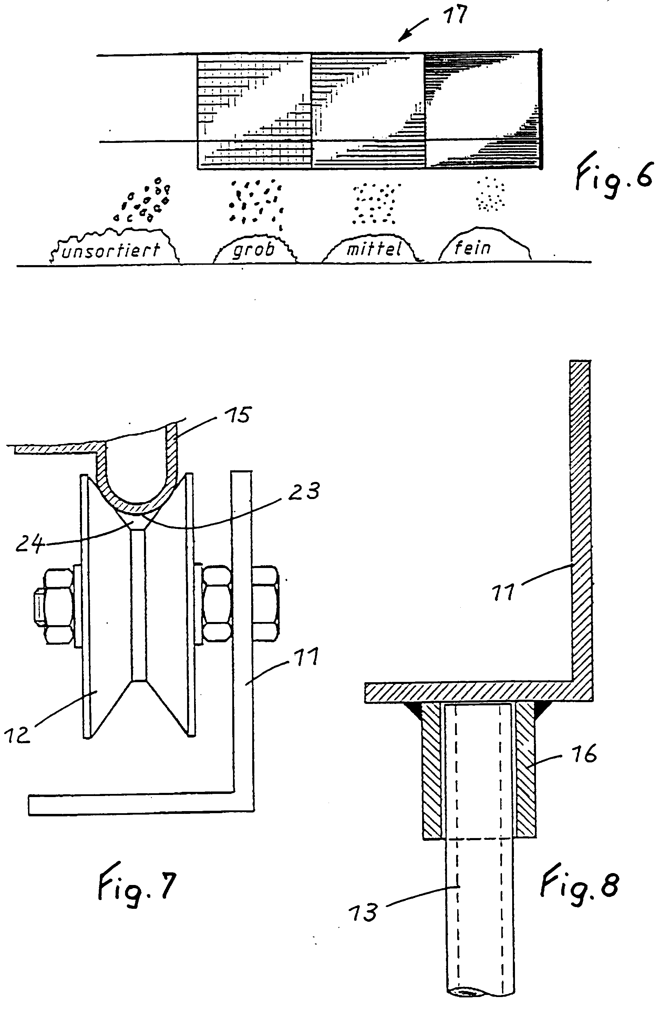

Der Oberteil 11 des Stativs 10 ist über eine Buchse 16 auf den Ständer 13 des Stativs aufsteckbar, wie aus Fig. 8 ersichtlich, und in bezug auf diesen Ständer drehbar gelagert.

Außerdem ist das Stativ 10 höhenverstellbar, um die Neigung der Längsachse 7 der Siebtrommel 1 in gewünschter Weise anpassen zu können. Zur Höhenverstellung des Stativs dient eine Stellschraube 26, die, wie in Fig. 5 angedeutet, eine Hülse 25 durchgreift, die auf den Stativständer 13 aufgesteckt ist. Das Stativ kann außerdem mit einer nicht dargestellten Rutsche für die maschinelle Beschickung der Siebtrommel 1 mit dem zu siebenden Kompost versehen sein, der normalerweise von Hand in die Siebtrommel eingefüllt wird und diese in Richtung auf das gegenüberliegende Trommelende 2 durchwandert, wobei die Kompostteilchen entsprechend ihrer Größe durch die Siebtrommel hindurchfallen.

Um dabei eine Klassierung des Siebgutes zu erreichen, kann die Siebtrommel mit Siebgewebe oder Siebblech unterschiedlicher Maschen- bzw. Lochweite bespannt sein, wie schematisch in Fig. 6 angedeutet, derart, daß sich das Gewebe bzw. Blech mit der größten Maschen- bzw. Lochweite an dem die Holme 6 aufweisenden Trommelende 2 und dasjenige mit der kleinsten Maschen- bzw. Lochweite sich an dem anderen Trommelende 3 befinden, das durch das Stativ 10 gestützt ist.

Der Sieb- bzw. Sortiervorgang des Kompostes wird nicht nur durch die Neigung der Siebtrommel wesentlich beeinflußt, sondern auch durch Bremsplatten 20, die verhindern, daß das Siebgut zu weit in die Trommel hineingeworfen wird, und schaufelartige Mitnehmer 21 innerhalb der Siebtrommel, wobei die Bremsplatten und die Mitnehmer einstellbar angebracht sein können und auch eine Verbindung zwischen Bremsplatten und Mitnehmern möglich ist.

Zur Reinigung von durch Kompost verstopften Maschen oder Löchern der Siebtrommel 1 kann eine nicht dargestellte Bürste dienen, die in bezug auf die rotierende Siebtrommel ortsfest angeordnet und mit der Sieboberfläche in Eingriff bringbar ist. In diesem Zusammenhang versteht es sich, daß anstelle von Kompost das Rollsieb auch für andere schüttfähige Materialien verwendet werden kann, die getrennt bzw. sortiert oder klassiert werden müssen, beispielsweise Sägespäne, Erde, Bauschutt, Rinde u. dgl.

Die Siebtrommel 1 ist zur Versteifung ihrer Konstruktion von mehreren Flacheisenringen 14 umgeben, von denen wenigstens einer im Bereich des einen Endes 3 der Siebtrommel angeordnet ist und anstelle des Führungsrings 15 oder zusammen mit diesem den Laufrollen 12 des Stativs 10 als Auflagerfläche dient.

Die Holme 6 sind gewöhnlich im Inneren der Siebtrommel 1 befestigt und dienen dort zugleich als Mitnehmer für das zu siebende Material, können jedoch auch auf der äußeren Siebtrommeloberfläche angebracht sein. Die Holme sind im Bereich der Mischtrommel mit Ausgleichs stücken 8 aus Holz oder Kunststoff versehen, die zur Verhinderung von Material-, insbesondere Lackschäden, dienen.

Fig. 3 zeigt, daß der hier beschriebene Kompostierer nicht nur als stehendes Kompostsilo oder Rollsieb in Verbindung mit einer geeigneten Drehantriebsvorrichtung, sondern auch als stationäres Wurfsieb für den Fall Verwendung finden kann, daß kein Drehantriebsaggregat zur Verfügung steht. Zu diesem Zweck werden die Holme 6 auf die Bodenfläche aufgelegt und die Siebtrommel 1 mit Hilfe des Stativs 10 in Schräglage gebracht und abgestützt. Daraufhin läßt sich der zu siebende Kompost in die obere Trommelöffnung einwerfen,und die auf der inneren Sieboberfläche herabrutschenden Materialien werden wie bei einem Flachsieb abgesiebt.

Schließlich ist darauf hinzuweisen, daß das Kompostsilo bei der in Fig. 1 dargestellten Verwendung auch mit einem Isoliermantel umgeben werden kann, um im Kompostmaterial die zur Kompostierung notwendigen Temperaturen besser halten zu können. Das Isoliermaterial ist dann so gebaut, daß es trotzdem die für die Kompostierung erforderliche Luftmenge hindurchläßt. Ein derartiger Isoliermantel, der in Fig. 1 nicht dargestellt ist, ist zudem verrottungs- und wasserfest.

Im übrigen dienen die in Fig. 4 dargestellten schaufelartigen Mitnehmer 21 dazu, klumpiges Kompostmaterial umzuwälzen und so lange auf die Sieboberfläche zurückzuwerfen, bis es eine Größe erreicht hat, die einen Durchgang dieser Materialstücke durch den zwischen Bremsplatte und Siebwand vorhandenen Freiraum in Richtung auf das Ende 2 der Siebtrommel 1 ermöglicht. Der Durchmesser der Bremsplatte 20 ist wählbar und richtet sich nach der Größe des ungesiebten Auswurfmaterials 19 (Fig. 2).

Als Drehantriebsvorrichtung für die Siebtrommel wird ein handelsüblicher Betonmischer verwendet, dessen Mischtrommel gemäß einer anderen Ansführungsform durch die Siebtrommel ersetzt ist. Dabei kann die Verbindung der Siebtrommel 1 mit der Drehantriebsvorrichtung des mischtrommellosen Betonmischers sowohl mit Hilfe eines Bajonettverschlusses als auch durch Schrauben am Lagerflansch der Mischtrommel erfolgen, wodurch ein rasches Auswechseln der Siebtrommel 1 gegen die Mischtrommel 9 erreicht wird, falls das besagte Gestell wieder als Betonmischer Verwendung finden soll.

Zur Vereinfachung der Antriebsverbindung zwischen Drehantriebsvorrichtung des Betonmischers 5 und der Siebtrommel 1 kann auch die Möglichkeit gegeben sein, die Antriebswelle der Trommel in die Lagerbohrung des Betonmischers einzustecken und dort zu sichern.

Im übrigen versteht es sich, daß die Siebtrommel unterschiedliche Maschenweiten aufweisen kann, wie auch die Möglichkeit gegeben sein kann, an ein und derselben Siebtrommel mehrere verschiedene Maschenweiten zu verwenden.

Somit wird erfindungsgemäß ein Kompostierer geschaffen, der aufgrund seines Aufbaus und seiner Arbeitsweise mehrere Funktionen erfüllen kann, und zwar insbesondere in Verbindung mit einer vorhandenen Drehantriebsvorrichtung eines von Hand verfahrbaren Betonmischers, der als handelsübliche Einheit weit verbreitet ist und eine standsichere und robuste Maschine bildet, die ohne weiteres eine Siebtrommel der oben beschriebenen Art tragen und antreiben kann, wobei der übliche Drehzahlbereich der Mischtrommel für das gewünschte Absieben des fertigen Kompostes mit Hilfe der Siebtrommel geeignet ist.

## Patentansprüche

1. Kompostierer mit einem trommelförmigen Kompostbehälter, der transportabel und zur Kompostierung senkrecht auf bzw. über einer Bodenfläche anordbar ist und dessen Trommel zumindest teilweise als zylindrische Siebtrommel (1) ausgebildet ist und an ihrem einen Ende (2) eine Kupplungsvorrichtung (4) zur Verbindung der Siebtrommel (1) in horizontaler oder nahezu horizontaler Lage mit einer Drehantriebsvorrichtung in Form eines handelsüblichen Betonmischers (5) aufweist,
**dadurch gekennzeichnet, daß**
der Kompostbehälten offene Trommelstirnseiten aufweist, die Siebtrommel (1) im Bereich ihres anderen Endes (3) mit Hilfe eines Stativs (10) gegen die Bodenfläche abstützbar ist und
daß die,Siebtrommel (1) so geshaltet ist, daß sie die Mischtrommel (9) des Betonmischers (5) ersetzen kann oder daß besagte Kupplungseinrichtung (4) mehrere parallel zur Trommellängsachse (7) verlaufende Holme (6) aufiveist, die der Trommel im nicht mit der Drehantriebsvorrichtung gekuppelten Zustand als Standbeine zur stehenden, stationären Verwendung des Kompostierers als Kompostsilo dienen und die an der Siebtrommel (1) befestigt und auf die Mischtrommel (9) des Betonmischers (5) zur Herstellung einer drehfesten Verbindung aufsteckbar sind.

2. Kompostierer nach Anspruch 1, **dadurch gekennzeichnet, daß** die drehfeste Verbindung mittels bajonettverschlußartigen Elementen herstellbar ist.

3. Kompostierer nach Anspruch 1 oder 2, **dadurch gekennzeichnet, daß** die Holme (6) im Inneren der Siebtrommel (1) befestigt sind.

4. Kompostierer nach Anspruch 3, **dadurch gekennzeichnet, daß** die Holme (6) im Inneren der Siebtrommel (1) zugleich als Mitnehmer für den zu siebenden Kompost dienen.

5. Kompostierer nach Anspruch 1 oder 2, **dadurch gekennzeichnet, daß** die sich parallel zur Trommellängsachse (7) erstreckenden Holme auf der äußeren Siebtrommeloberfläche befestigt sind.

6. Kompostierer nach einem der vorhergehenden Ansprüche, **dadurch gekennzeichnet, daß** die Holme (6) im Bereich der Mischtrommel (9) des Betonmischers (5) mit Ausgleichsstücken (8) aus Holz oder Kunststoff zur Verhinderung von Lackschäden versehen sind.

7. Kompostierer nach einem der vorhergehenden Ansprüche, **dadurch gekennzeichnet, daß** die Neigung der Siebtrommel (1) mit der Drehantriebsvorrichtung einstellbar ist.

8. Kompostierer nach einem der vorhergehenden Ansprüche, **dadurch gekennzeichnet, daß** das Stativ (10) einen Oberteil (11) aufweist, der mit Laufrollen (12) versehen ist, auf denen die Oberfläche der Siebtrommel (1) abrollt.

9. Kompostierer nach Anspruch 8, **dadurch gekennzeichnet, daß** die Laufrollen (12) im Querschnitt keilriemenförmig ausgebildet sind.

10. Kompostierer nach Anspruch 8 oder 9, **dadurch gekennzeichnet, daß** das Oberteil (11) des Stativs (10) auf den Ständer (13) des Stativs aufsteckbar und in bezug auf diesen drehbar ist.

11. Kompostierer nach einem der vorhergehenden Ansprüche, **dadurch gekennzeichnet, daß** das Stativ (10) höhenverstellbar ist.

12. Kompostierer nach einem der Ansprüche 8 bis 11, **dadurch gekennzeichnet, daß** das Stativ (10) eine Rutsche für maschinelle Beschickung der Siebtrommel (1) aufweist.

13. Kompostierer nach einem der vorhergehenden Ansprüche, **dadurch gekennzeichnet, daß** die Siebtrommel (1) von mehreren Flacheisenringen (14) umgeben ist, von denen wenigstens einer im Bereich des einen Endes (3) der Siebtrommel angeordnet ist und den Laufrollen (12) des Stativs (10) als Auflagefläche dient.

14. Kompostierer nach einem der vorhergehenden Ansprüche, **dadurch gekennzeichnet, daß** die Siebtrommel (1) mit Siebgewebe oder Siebblech unterschiedlicher Maschenbzw. Lochweite bespannt ist derart, daß sich das Gewebe bzw. Blech mit der größten Maschen- bzw. Lochweite an dem die Holme (6) aufweisenden Trommelende (2) und dasjenige mit der kleinsten Maschen- bzw. Lochweite sich an dem anderen Trommelende (3) befindet, das durch das Stativ (10) abstützbar ist.

15. Kompostierer nach Anspruch 14, **dadurch gekennzeichnet, daß** die Siebtrommel (1) als Durchwurfsieb verwendbar ist.

16. Kompostierer nach einem der vorhergehenden Ansprüche, **dadurch gekennzeichnet, daß** die Siebtrommel (1) zur Wärmeisolierung mit einem Isoliermantel aus einem verrottungsfesten, wasserfesten und luftdurchlässigen Material umgeben ist.

17. Kompostierer nach einem der vorhergehenden Ansprüche, **dadurch gekennzeichnet, daß** über der Siebtrommel (1) zu Reinigungszwecken eine Bürste angeordnet ist, die in bezug auf die rotierende Siebtrommel ortsfest ist und mit der Sieboberfläche in Eingriff bringbar ist.

18. Kompostierer nach einem der vorhergehenden Ansprüche, **dadurch gekennzeichnet, daß** sich in der Siebtrommel (1) wenigstens eine Bremsplatte (20) befindet, die verhindert, daß das Siebgut zu weit in die Trommel eingeworfen wird.

19. Kompostierer nach einem der vorhergehenden Ansprüche, **dadurch gekennzeichnet, daß** sich in der Siebtrommel (1) schaufelartige Mitnehmer (21) für das Siebgut befinden.

20. Kompostierer nach den Ansprüchen 18 und 19, **dadurch gekennzeichnet, daß** die Bremsplatten (20) und Mitnehmer (21) einstellbar angebracht sind.

21. Kompostierer nach Anspruch 19 oder 20, **dadurch gekennzeichnet, daß** die Bremsplatten (20) an den Mitnehmern (21) befestigt sind.

22. Kompostierer nach Anspruch 1, **dadurch gekennzeichnet, daß** die Siebtrommel (1) mit Hilfe eines Bajonettverschlusses oder durch Schrauben an dem Lagerflansch der Mischtrommel (9) angebracht und durch Lösen des Bajonettverschlusses bzw. der Schrauben gegen die Mischtrommel (9) austauschbar ist.

23. Kompostierer nach Anspruch 1 oder 22, **dadurch gekennzeichnet, daß** zum Zwecke des Drehantriebs der Siebtrommel (1) die Antriebswelle der Trommel in die Lagerbohrung des Betonmischers (5) einsteckbar und in dieser Bohrung sicherbar ist.

24. Kompostierer nach einem der vorhergehenden Ansprüche, **dadurch gekennzeichnet, daß** die Siebtrommel (1) unterschiedliche Maschenweiten aufweist.

## Claims

1. Composting device, comprising a drum-like composting container, which is transportable and may be positioned perpendicularly on or above a ground face for composting purposes, having a screen drum (1) provided at one end (2) with clutch means (4) for the connection of the screen drum (1) in a horizontal or nearly horizontal position with a rotational driving means in form of a commercially available concrete mixing device (5), **characterized in that** the drum of the composting container is provided with open faces, the screen drum (1) may be supported on the ground face by means of a stand (10) at its other end (3) and that the screen drum (1) is configured such that it can be replaced by the mixing drum (9) of the concrete mixing device (5) or that the said coupling means (4) is provided with several posts extending parallel to the longitudinal axis (7) of the drum, which posts serving as legs in case the drum is not connected to the rotational driving device for using the composting device as a standing, stationary composting container and which posts in case they are connected to the screen drum (1) can be fixed on the mixing drum (9) ofthe concrete mixing device (5) in order to establish a rotationally fixed connection therebetween.

2. Composting device according to claim 1, **characterized in that** the rotationally fixed connection can be established by means of bayonet closure-like elements.

3. Composting device according to claim 1 or 2, **characterized in that** the posts (6) are connected within the screen drum (1).

4. Composting device according to claim 3, **characterized in that** the posts (6) within the screen drum (1) are simultaneously used as baffles for the compost to be sieved.

5. Composting device according to claim 1 or 2, **characterized in that** the posts extending parallel to the longitudinal axis (7) of the drum are connected to the outer surface ofthe screen drum.

6. Composting device according to one ofthe proceeding claims, **characterized in that** the posts (6) are provided in the range of the mixing drum (9) of the concrete mixing device (5) with adjusting pieces (8) of wood or plastic in order to avoid damaging of the coat of varnish.

7. Composting device according to one of the proceeding claims, **characterized in that** the inclination of the screen drum (1) can be adjusted by the rotational driving device.

8. Composting device according to one of the proceeding claims, **characterized in that** the stand (10) is provided with an upper portion (11) having running rolls (12) on which the surface ofthe screen drum (1) is rolling.

9. Composting device according to claim 8, **characterized in that** the running rolls (12) are provided with a V-belt-like cross section.

10. Composting device according to claim 8 or 9, **characterized in that** the upper portion (11) of the stand (10) can be put on the post (13) of the stand and connected thereto rotationally fixed.

11. Composting device according to one of the proceeding claims, **characterized in that** the stand (10) is adjustable with respect to its level.

12. Composting device according to one ofthe claims 8 - 11, **characterized in that** the stand (10) is provided with a shute for feeding the screen drum (1) mechanically.

13. Composting device according to one ofthe proceeding claims, **characterized in that** the screen drum (1) is surrounded by several flat iron annular rings (14), at least of them is arranged at the one end (3) of the screen drum so that the running rolls (12) of the stand (10) may be supported by that annular ring.

14. Composting device according to one of the proceeding claims, **characterized in that** the screen drum (1) is spanned by a sieve web or sieve plate of different mesh widths or width of apertures, respectively, such that the fabric or plate, respectively, provided with the largest widths of mesh or aperture, respectively, is located at that drum end (2) provided with the posts (6) and that the fabric or plate, respectively, provided with the smallest widths of mesh or aperture, respectively, is located at the other drum end (3) which can be supported by the stand (10).

15. Composting device according to claim 14, **characterized in that** the screen drum (1) may be used as sieve onto which the material to be sieved is thrown.

16. Composting device according to one of the proceeding claims, **characterized in that** the screen drum (1) is provided for heat isolation purposes with an isolating coat of rotten-proof water-proof and air permeable material.

17. Composting device according to one of the proceeding claims, **characterized in that** over the screen drum (1) a brush is arranged for cleaning purposes which is fixed with respect to the rotating screen drum and can be brought in contact with the surface of the screen.

18. Composting device according to one of the proceeding claims, **characterized in that** within the screen drum (1) is at least one brake plate (20) avoiding that the material to be sieved is thrown too far into the drum.

19. Composting device according to one of the proceeding claims, **characterized in that** within the screen drum (1) are provided blate-like baffles (21) for the material to be sieved.

20. Composting device according to claims 18 and 19, **characterized in that** the brake plates (20) and baffles (21) are fixed adjustably.

21. Composting device according to claim 19 or 20, **characterized in that** the brake plates (20) are connected to the baffles (21).

22. Composting device according to claim 1, **characterized in that** the screen drum (1) is connected to the mounting flange of the mixing drum (9) by means of a bayonet closure or by screws and can be replaced by the mixing drum (9) after the bayonet closure or the screws, respectively, have been released.

23. Composting device according to claim 1 or 22, **characterized in that** for the purpose of rotationally driving the screen drum (1) the driving shaft of the drum can be inserted into the mounting bore ofthe concrete mixing device (5) and can be fixed in that bore.

24. Composting device according to one of the proceeding claims, **characterized in that** the screen drum (1) is provided with different widths of mesh.

## Revendications

1. Dispositif de compostage pourvu d'un récipient de compostage transportable et pouvant être installé pour le compostage verticalement sur, respectivement au-dessus d'une surface de sol et dont le tambour est au moins partiellement un tambour tamiseur cylindrique (1) et présente à l'une de ses extrémités (2) un dispositif d'accouplement (4) pour la liaison du tambour tamiseur (1) en position horizontale ou presque horizontale avec un dispositif d'entraînement en rotation sous forme d'une bétonnière de type courant (5),
caractérisé en ce que
le récipient de compostage présente des faces frontales de tambour ouvertes,
le tambour tamiseur (1) peut s'appuyer, dans la zone de son autre extrémité (3), à l'aide d'un support (10), sur la surface du sol et
en ce que le tambour tamiseur (1) est conçu de façon qu'il puisse remplacer le tambour malaxeur (9) de la bétonnière (5)
ou en ce que ledit dispositif d'accouplement (4) présente plusieurs longerons (6) s'étendant parallèlement à l'axe longitudinal du tambour (7) qui servent, dans l'état non accouplé au dispositif d'entraînement en rotation, de jambes de support au tambour pour une utilisation verticale fixe du dispositif de compostage comme réservoir de compostage et qui peuvent être fixés au tambour tamiseur (1) et peuvent s'emboîter sur le tambour malaxeur (9) de la bétonnière (5) pour réaliser une liaison en rotation.

2. Dispositif de compostage selon la revendication 1, caractérisé en ce que la liaison en rotation peut être réalisée au moyen d'éléments du type à raccord à baïonnette.

3. Dispositif de compostage selon la revendication 1 ou 2, caractérisé en ce que les longerons (6) sont fixés à l'intérieur du tambour tamiseur (1).

4. Dispositif de compostage selon la revendication 3, caractérisé en ce que les longerons (6) à l'intérieur du tambour tamiseur (1) servent également d'organes d'entraînement pour le compost à tamiser.

5. Dispositif de compostage selon la revendication 1 ou 2, caractérisé en ce que les longerons s'étendant parallèlement à l'axe longitudinal du tambour (7) sont fixés sur la surface extérieure du tambour tamiseur.

6. Dispositif de compostage selon l'une quelconque des revendications précédentes, caractérisé en ce que les longerons (6) sont pourvus dans la zone du tambour malaxeur (9) de la bétonnière (5) de pièces de compensation (8) en bois ou en matière plastique pour éviter les dommages à la peinture.

7. Dispositif de compostage selon l'une quelconque des revendications précédentes, caractérisé en ce que l'inclinaison du tambour tamiseur (1) est réglable avec le dispositif d'entraînement en rotation.

8. Dispositif de compostage selon l'une quelconque des revendications précédentes, caractérisé en ce que le support (10) présente une partie supérieure (11) qui est pourvue de galets de roulement (12) sur lesquels roule la surface du tambour tamiseur (1).

9. Dispositif de compostage selon la revendication 8, caractérisé en ce que les galets de roulement (12) ont en coupe une forme de courroie trapézoïdale.

10. Dispositif de compostage selon la revendication 8 ou 9, caractérisé en ce que la partie supérieure (11) du support (10) peut s'emboîter sur le pied (13) du support et peut tourner par rapport à celui-ci.

11. Dispositif de compostage selon l'une quelconque des revendications précédentes, caractérisé en ce que le support (10) est réglable en hauteur.

12. Dispositif de compostage selon l'une quelconque des revendications 8 à 11, caractérisé en ce que le support (10) présente une goulotte pour le chargement manuel du tambour tamiseur (1).

13. Dispositif de compostage selon l'une quelconque des revendications précédentes, caractérisé en ce que le tambour tamiseur (1) est entouré de plusieurs anneaux de fer plat (14) dont l'un au moins est disposé dans la zone de l'une des extrémités (3) du tambour tamiseur et sert de surface d'appui aux galets de roulement (12) du support (10).

14. Dispositif de compostage selon l'une quelconque des revendications précédentes, caractérisé en ce que le tambour tamiseur (1) est recouvert de toile de tamisage ou de tôle de tamisage de différentes ouvertures de maille, respectivement ouvertures de trou de telle sorte que la toile, respectivement la tôle de plus grande ouverture de maille, respectivement de trou se trouve à l'extrémité de tambour (2) présentant les longerons (6) et celle présentant la plus petite ouverture de maille, respectivement de trou se trouve à l'autre extrémité de tambour (3) qui peut être supportée par le support (10).

15. Dispositif de compostage selon la revendication 14, caractérisé en ce que le tambour tamiseur (1) peut être utilisé comme crible.

16. Dispositif de compostage selon l'une quelconque des revendications précédentes, caractérisé en ce que le tambour tamiseur (1) est entouré, pour son isolation thermique, d'une gaine isolante en un matériau résistant au pourrissement, résistant à l'eau et perméable à l'air.

17. Dispositif de compostage selon l'une quelconque des revendications précédentes, caractérisé en ce qu'une brosse de nettoyage est disposée au-dessus du tambour tamiseur (1), qui est fixe par rapport au tambour tamiseur tournant et peut être amenée au contact de la surface de tamisage.

18. Dispositif de compostage selon l'une quelconque des revendications précédentes, caractérisé en ce qu'il y a dans le tambour tamiseur (1) au moins une plaque de ralentissement (20) qui empêche que le matériau à tamiser soit introduit trop loin dans le tambour.

19. Dispositif de compostage selon l'une quelconque des revendications précédentes, caractérisé en ce qu'il y a dans le tambour tamiseur (1) des organes d'entraînement du matériau à tamiser en forme de palettes (21).

20. Dispositif de compostage selon les revendications 18 et 19, caractérisé en ce que les plaques de ralentissement (20) et les organes d'entraînement (21) sont montés réglables.

21. Dispositif de compostage selon la revendication 19 ou 20, caractérisé en ce que les plaques de ralentissement (20) sont fixées aux organes d'entraînement (21).

22. Dispositif de compostage selon la revendication 1, caractérisé en ce que le tambour tamiseur (1) est monté sur la bride de palier du tambour malaxeur (9) à l'aide d'un raccord à baïonnette ou par vissage et en défaisant le raccord à baïonnette, respectivement en dévissant les vis il peut être remplacé par le tambour malaxeur (9).

23. Dispositif de compostage selon la revendication 1 ou 22, caractérisé en ce que pour l'entraînement en rotation du tambour tamiseur (1) l'axe moteur du tambour peut être enfiché dans l'alésage de palier de la bétonnière (5) et peut être fixé dans cet alésage.

24. Dispositif de compostage selon l'une quelconque des revendications précédentes, caractérisé en ce que le tambour tamiseur (1) présente plusieurs ouvertures de maille.
